# EUROPEAN PATENT APPLICATION

(11) **EP 2 644 455 A1**
(43) Date of publication of application: **02.10.2013**
(21) Application number: 13160874.7
(22) Date of filing: 25.03.2013
(51) Int. Cl.: B60R 13/08

(54) **Improved vehicle sound insulation**

(30) Priority: 28.03.2012 GB 201205433
(71) Applicant: Nissan Motor Manufacturing (UK) Ltd., Cranfield Bedfordshire MK43 0DB (GB)
(72) Inventor: Payne, Robert, Cranfield, Bedfordshire MK430DB (GB); Robertson, Michael, Cranfield, Bedfordshire MK430DB (GB)

(57) **Abstract**

A vehicle sound insulator 10 arranged for installation to a vehicle cavity 11 is described. The vehicle sound insulator 10, when installed, comprises a plurality of insulator portions 13a, 14a, 15a. The insulator portions 13a, 14a, 15a are spaced from one another within the cavity 11 so as to attenuate a predetermined sound-wave transmitted through the vehicle cavity 11, said sound-wave having a predetermined frequency range.

## Description

### Field of the invention

The present invention concerns improvements in vehicle sound insulation, in particular sound insulation utilising heat-activated expanding foam.

### Background to the invention

Sound insulation provided within vehicles can take on many forms, including mats, sprays, fibre insulation and foams. In particular, it is known in the art to introduce expanding foams into vehicle cavities to fill them. Such expanding foams are a relatively inexpensive and lightweight way of insulating against noise, heat and even moisture. Furthermore, such expanding foams can also be used as a reinforcing material, imparting stiffness to the vehicle chassis, especially in the region defining the cavity.

Conveniently, such expanding foams are heat-activated. A portion of unexpanded foam can be placed into the cavity, and then heated to expand during a standard vehicle manufacturing process, for example during a paint-bake or e-coat heating process. Although these expanding foams retain their unexpanded form at standard temperature and pressure, during heating they can expand to at least 1000% of their original volume, thus reliably filling most cavities.

Foam composition in the context of the present invention is well-known in the art. Generally, such foam comprises a polymer, a blowing agent for producing gasses that expand the foam, a filler to bulk out the foam, and additives to impart desired properties to the foam such as rigidity or strength.

Nonetheless, there is a continuing need to improve the sound-insulating characteristics of such foams applied to vehicles. The present invention addresses this need at least in part.

### Summary of the Invention

Accordingly, a first aspect of the present invention provides a vehicle sound insulator arranged for installation to a vehicle cavity, the vehicle sound insulator, when installed, comprising a plurality of insulator portions. Preferably, the plurality of insulator portions are spaced from one another so as to attenuate a predetermined sound-wave transmitted through the vehicle cavity. Ideally, the sound-wave has a predetermined frequency range.

The filling of the vehicle cavity with spaced insulator portions advantageously reduces material usage within the vehicle cavity. As the insulator portions are spaced, the resulting gaps mean that vehicle weight and material cost can be reduced more than if the cavity were to be completely filled with noise-insulating material. To maximise weight and cost advantages, these gaps are normally air-gaps.

It will be appreciated that merely reducing insulating material quantity within the vehicle cavity would normally proportionally attenuate the sound-wave. However, by specifically choosing the spacing of the insulator portions, a sound-wave having predetermined properties can be specifically attenuated.

This is particularly advantageous in vehicles where airborne noise sources are predictable - for example, noises from an engine compartment. The predetermined sound-wave to be attenuated generally has the property of being in a particular frequency/wavelength range.

Accordingly, it is preferable for the spacing of the insulator portions to be selected to tune the sound insulator to absorb the frequency range of the predetermined sound-wave. In other words, the attenuation of that particular frequency range can be maximised by choosing a specific spacing of the insulator portions to tune the sound-wave insulator to absorb that frequency or frequency range.

Such frequency-selective sound attenuation can also be achieved by controlling the specific shape of, arrangement of, porosity of, density of and/or width of insulator portions within the cavity. Such frequency-selective sound attenuation can further be achieved by controlling the spacing between insulator portions.

The specific distances and densities concerned are dependent on the specific frequency range of the sound-wave to be attenuated, and in practice can be determined empirically through experimentation. However, it is generally preferred that the separation distance, or spacing between insulator portions is between a quarter and a half of the wavelength of the sound-wave to be attenuated.

More preferably, the separation distance is approximately a quarter of the wavelength of the sound-wave to be attenuated. More preferably, the width of one of the insulator portions plus the separation distance to another of the insulator portions is approximately a quarter of the wavelength of the sound-wave to be attenuated. In other words, the preferred spacing between three insulator-space boundaries is a quarter of the wavelength of the sound-wave to be specifically attenuated.

'Width' and 'separation', in the present context, is generally measured in a direction that the predetermined sound-wave would travel through the vehicle cavity from a sound source on one side of the vehicle cavity, to an sound-insulated position on the other side of the vehicle cavity. For example, the cavity may be located in a passenger door, in which case, the sound-source would be the environment external to the vehicle, and the sound-insulated position would be the passenger cabin within the vehicle.

It may be desirable to attenuate a plurality of sound-waves that have different frequencies, or frequency ranges. Accordingly, it is preferred that there are a plurality of sets of insulator portions, each set being arranged to attenuate a different predetermined sound-wave transmitted through the vehicle cavity. Thus, the shape, density, width and/or separation of insulator portions in one set may be different from the shape, density, width and/or separation of insulator portions in another set.

As mentioned, the gaps that result from the spacing, shape and arrangement of the insulator portions are advantageously air-gaps; vehicle weight and material cost can be reduced more than if the cavity were to be completely filled with noise-insulating material, and also the manufacturing process can be simplified. However, in alternatives, the gaps may be filled with a material other than air, or even comprise a partial vacuum. Nonetheless, a differential between the densities of the spaced insulator portions and the gaps is suitable to achieve frequency-selective noise attenuation.

To further maximise frequency-selective noise attenuation, and also to provide greater options as to the number of different frequency ranges that can be selectively attenuated, it is preferred that there are at least three insulator portions.

Preferably, at least one insulating portion extends between internal facing surfaces of the cavity.

Ideally, at least one insulating portion extends across the cavity and contacts with the cavity along a continuous looping region defined about the internal surface of the cavity. Ideally, at least one insulating portion seals against the internal surface of the cavity.

Preferably, the insulator portions are arranged to compartmentalise the vehicle cavity into a plurality of compartments. Ideally, the compartments are isolated from one another. Advantageously, this minimises noise leakage between the separate compartments and so can maximise sound attenuation.

Optionally, at least one insulating portion extends substantially along a plane. Ideally, the plane extends transverse to a direction that the predetermined sound-wave travels through the vehicle cavity from a sound source on one side of the vehicle cavity, to an sound-insulated position on the other side of the vehicle cavity.

Preferably, the plurality of insulating portions extend along respective planes, each plane being spaced from another, and each plane extending substantially transverse to a direction that the predetermined sound-wave travels through the vehicle cavity from a sound source on one side of the vehicle cavity, to an sound-insulated position on the other side of the vehicle cavity.

Ideally, the vehicle sound insulator comprises a plurality of expandable portions that are expandable to form said insulator portions. Ideally, each expandable portion forms a respective insulator portion.

Preferably, said expandable portions are expandable on-demand.

Advantageously, this allows the sound insulator to be easily fitted into the cavity prior to expansion of the expandable portions. Once fitted to the cavity, the expandable portions can be controllable expanded in situ so as to conform tightly to the internal shape of the cavity. Thus, this maximises the reliability with which the insulator portions insulate against sound-wave passing through the cavity without detracting from the ease with which the sound insulator can be fitted to the cavity.

Preferably, said expandable portions are heat activated. Thus, the expandable portions are expandable at a predetermined temperature. Ideally, said predetermined temperature corresponds to the temperature to which the vehicle is exposed during a standard vehicle heating process - for example, a paint bake process.

The insulating portions may be supported on a common carrier. Preferably, the expandable portions are supported on a common carrier. Advantageously, this allows the convenient fitment of plural expandable portions to the cavity. Moreover, the specific shape, arrangement and/or spacing of the expandable portions (and thus the resulting insulating portions) can be assured. As the expandable portions and/or insulating portions are supported on a common carrier, this obviates user misplacement of the expandable portions relative to one another.

Preferably, the carrier comprises an adhesive to facilitate fixing of the expandable portions to an internal surface of the vehicle cavity. Advantageously, this allows convenient positioning and fitment of the expandable portions within the cavity prior to heat-activation.

Ideally, the vehicle sound insulator comprises guide portions arranged to guide the formation of the insulator portions via a controlled expansion of the expandable portions. Advantageously, this means that the shape, spacing and arrangement of the resulting insulator portions can be controlled to maximise their sound-insulating efficacy.

Preferably, the expandable portions comprise foam portions.

According to a second aspect of the present invention there is provided a vehicle sound insulator arranged for installation to a vehicle cavity, the vehicle sound insulator, when installed, comprising: a plurality of spaced insulator portions, at least one of which has a predetermined width to attenuate a predetermined sound-wave transmitted through the vehicle cavity, said width being measured in a direction substantially aligned with a direction that the predetermined sound-wave would travel through the vehicle cavity from a sound source on one side of the vehicle cavity, to an sound-insulated position on the other side of the vehicle cavity.

According to a third aspect of the present invention there is provided a method of attenuating a predetermined sound-wave transmitted through a vehicle cavity. Ideally, the method comprises:
determining properties of the predetermined sound-wave to be attenuated;
installing a plurality of insulator portions within the cavity; and
controlling the spacing, shape and/or arrangement of at least one of the insulator portions to attenuate said predetermined sound-wave.

Preferably, the step of installing a plurality of insulator portions comprises positioning heat-activated expanding foam portions within the cavity, and then expanding the foam portions to form the insulator portions by heating them to a predetermined expansion temperature.

According to a fourth aspect of the present invention there is provided a method of manufacturing a vehicle having a cavity installed with a sound insulator according to first and/or second aspects of the present invention.

Preferably, the method of manufacturing the vehicle further comprises:
positioning heat-activated expandable portions within the cavity and then carrying out a heating vehicle manufacturing process, such as a paint bake process, to thereby expand the heat-activated expandable portions to form the insulator portions.

Advantageously, the heating vehicle manufacturing process, which utilises substantial energy, can be used to simultaneously fulfil both its original purpose (such as baking the paintwork) and also to reliably expand the expandable portions to form the insulator portions. Beneficially, a separate expanding heat treatment for each process is not required.

According to a fifth aspect of the present invention there is provided a vehicle comprising a sound insulator according to the first or second aspects and/or manufactured comprising a method according to third or fourth aspects of the present invention.

It will further be understood that features or advantages of different aspects of the present invention may be combined or substituted where context allows.

### Brief description of the drawings

Embodiments of the present invention will now be described, by way of example only, with reference to the accompanying drawings, in which:
Figure 1 is a schematic perspective view of an sound insulator according to a first embodiment of the present invention comprising foam portions in an unexpanded state, the sound insulator being fitted within a vehicle cavity;
Figure 2 is the schematic perspective view of the sound insulator of Figure 1, wherein the foam portions are expanded to form insulator portions within the vehicle cavity;
Figure 3 is a sectional schematic view of a sound insulator according to a second embodiment of the present invention, comprising foam portions in an unexpanded state, the sound insulator being fitted within a vehicle cavity;
Figure 4 is the sectional schematic view of the sound insulator of Figure 3, wherein the foam portions are in an expanded state to form insulator portions within the vehicle cavity;
Figure 5 is a sectional schematic view of the sound insulator of Figure 3, taken along section V-V;
Figure 6 is a sectional schematic view of the sound insulator of Figure 4, taken along section VI-VI; and
Figure 7 is a sectional schematic view of a sound insulator according to a third embodiment of the present invention, comprising foam portions in an unexpanded state, the sound insulator being shown in isolation.

### Specific description of the embodiments of the invention

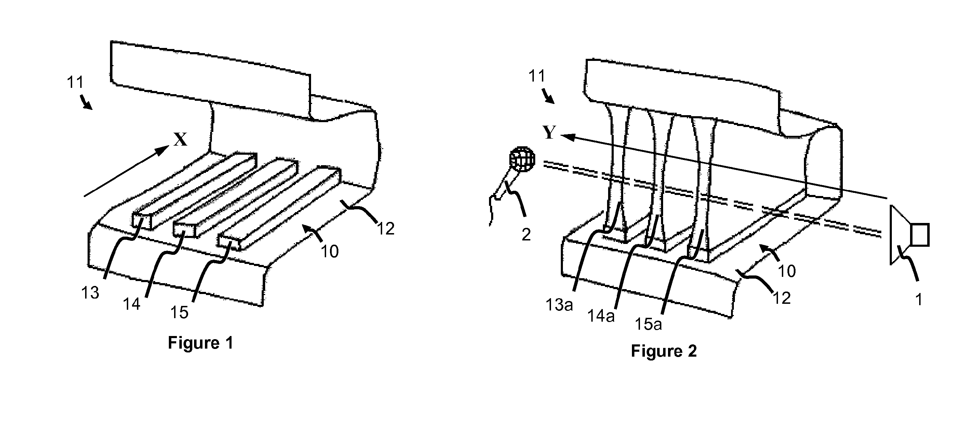

Figure 1 is a schematic perspective view of an sound insulator 10 according to a first embodiment of the present invention comprising foam portions 13, 14, 15 in an unexpanded state, the sound insulator 10 being fitted within a vehicle cavity 11. The vehicle cavity 11 is defined by internal walls 12 of a surrounding structure of the vehicle. Although Figures 1 and 2 show the cavity to be partially open, it will be appreciated that this is primarily for viewing clarity.

The foam portions 13, 14, 15 have a uniform cross-section and are strip-shaped, being elongate along their length as measured along axis X as shown in Figure 1. The foam portions 13, 14, 15 are stuck onto a lower internal wall of the cavity 11 spaced from one another, and aligned to be parallel to one another along their length, with a regular spacing between them. The foam portions 13, 14, 15 are made of a heat-activated material so that when subjected to heat, they expand.

Figure 2 is the schematic perspective view of the sound insulator 10 of Figure 1, wherein the foam portions 13, 14, 15 have been expanded under action of heat. The foam portions 13, 14, 15 form insulator portions 13a, 14a, 15a within the vehicle cavity 11 that insulate against sound passing through the vehicle cavity 11.

Whilst not immediately apparent in Figure 2, it should be appreciated that the insulator portions 13a, 14a, 15a extend between the internal walls 12 of the cavity 11 so as to form isolated compartments - i.e. the air gaps that are either side of each insulator portion are not in communication with one another.

The insulator portions 13a, 14a, 15a are shaped and arranged to attenuate a predetermined sound-wave transmitted through the vehicle cavity 11 along axis Y from a sound source 1 on one side of the vehicle cavity 11, to an sound-insulated position 2 on the other side of the vehicle cavity.

This is because the insulator portions 13a, 14a, 15a are tuned to absorb a sound-wave having a predetermined frequency by virtue of their width and spacing relative to another - both as measured along axis Y. Moreover, to maximise the attenuation of a predetermined sound-wave along axis Y, the ideal spacing along axis Y between three foam-air boundaries is chosen to be a quarter of the wavelength of the sound-wave to be specifically attenuated.

The width and spacing of the insulator portions 13a, 14a, 15a, from one another may be subject to variations. For example, as can be seen in Figure 2, the regions of the insulator portions 13a, 14a, 15a adjacent the internal walls are thicker than the other regions as a side-effect of the expansion process. However, the variations are relatively small, and so do not have a practical adverse effect on the frequency-selective sound insulating properties of the insulator portions 13a, 14a, 15a. Rather, the insulator portions 13a, 14a, 15a will absorb a frequency range rather than a specific frequency.

In the present embodiment, referring back to Figure 1, the unexpanded foam portions 13, 14, 15 are individually positioned onto the interior wall 12 of the cavity 11, either by an operator or via an automated machine. Generally, the foam portions in unexpanded form are in a substantially solid state, and can simply be stuck into position using a suitable adhesive. For example, each foam portion strip may be provided together with a double-sided adhesive tape between the foam portion material and a backing tape. During fitment of the foam portions, the backing tape is removed to expose the adhesive so that the foam portions can be simply pressed into position within the vehicle cavity 11. Advantageously, this means the foam portions 13, 14, 15 can be supplied as a continuous roll, and so cut to size depending on the size of the cavity. In alternatives, the foam portions may be extruded in place, as is known in the art. In any case, to facilitate fitment to the cavity, it is only once the foam portions are in place that they are expanded under the action of heat.

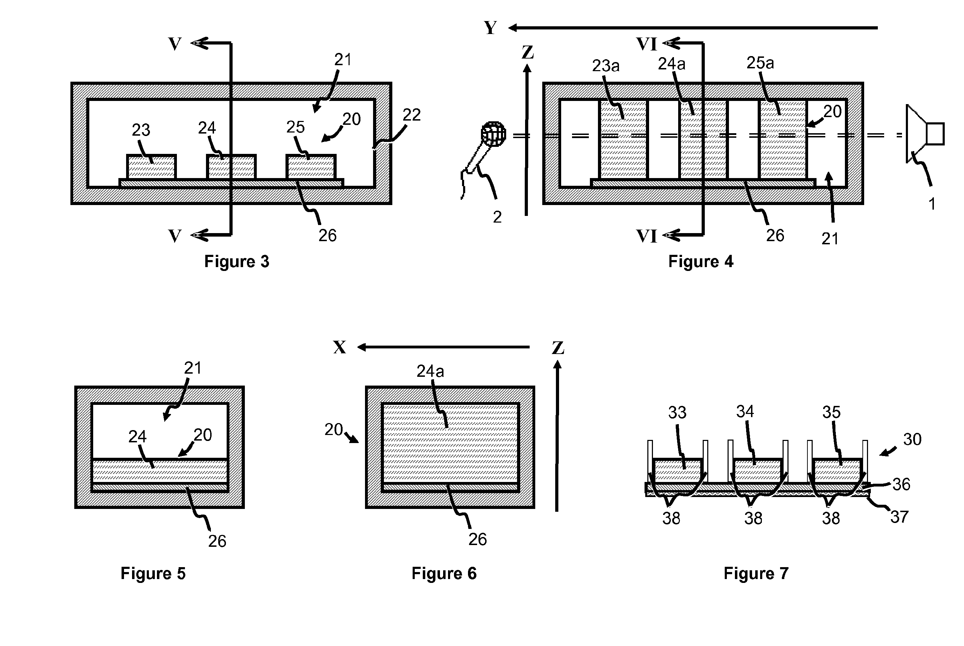

Figure 3 is a sectional schematic view of a sound insulator 20 according to a second embodiment of the present invention, comprising foam portions 23, 24, 25 in an unexpanded state, the sound insulator being fitted within a vehicle cavity 21 having internal walls 22. The principles of this second embodiment are similar to the first embodiment, however with the difference that the foam portions 23, 24, 25 are provided on a common carrier 26 which is in the form of an adhesive tape. The carrier 26 supports the foam portions 23, 24, 25 so as to predefine their spacing and arrangement relative to one another. Furthermore, the carrier 26 conveniently allows the foam portions 23, 24, 25 to be introduced into the cavity 21 by an operator or machine as part of a single unit, simplifying installation. Thus, foam portion strips do not need to be laid into the cavity 21 individually. As before, the foam portions 23, 24, 25 together with the carrier 26 can be provided on a roll enabling the foam portions to extend along the entire length of the cavity 21 - as can be seen in Figure 5 which shows a sectional schematic view of the sound insulator 20 of Figure 3, taken along section V-V. Once fitted to the cavity, the foam portions 23, 24, 25 can be expanded under action of heat as before.

Figure 4 is the sectional schematic view of the sound insulator 20 of Figure 3, wherein the foam portions 23, 24, 25 are in an expanded state to form insulator portions 23a, 24a, 25a within the vehicle cavity 21.

Figure 6 is a sectional schematic view of the sound insulator 20 of Figure 4, taken along section VI-VI. From Figure 6, it can thus be seen that the insulator portions 23a, 24a, 25a extend to the height of the cavity 21, along axis Z and also across the length of the cavity 21 along axis X, thereby compartmentalising the cavity 21.

Figure 7 is a sectional schematic view of a sound insulator 30 according to a third embodiment of the present invention, comprising foam portions 33, 34, 35 in an unexpanded state, the sound insulator 30 being shown in isolation from a vehicle cavity. Here, the sound insulator 30 is similar to the second embodiment, in that the foam portions 33, 34, 35 are supported by a common carrier 36. In this third embodiment, the carrier 36 is shown together with a backing tape 37.

The sound insulator 30 also comprises a series of guide portions 38, each guide portion 38 being positioned adjacent to each foam portion 33, 34, 35. The guide portions 38 are arranged to control the expansion direction of the foam portions 33, 34, 35 to guarantee that resulting insulator portions will have spaces disposed between them. This arrangement is particularly advantageous where the foam portions 33, 34, 35 are positioned close together and under normal conditions would expand into one another on heating.

### Alternatives, improvements and definitions

a) Although the foregoing embodiments recite a way of insulating against a sound-wave travelling through a vehicle cavity, it will be appreciated that the structure in which the cavity is defined does not necessarily need to be entirely enclosed to realise the aforementioned benefits of frequency-selective noise attenuation.
b) In some situations, it may be desirable to attenuate a number of different frequencies, and so the resulting insulator portions can be chosen to be of different materials, porosities, densities, widths and spacings. To this end at least three insulator portions are preferred to enable a plurality of frequencies to be selectively attenuated.
c) The aforementioned embodiments recite heat-activated foam portions that expand to form said insulator portions. However, a person skilled in the art will appreciate that other materials that are capable of expanding to form said insulator portions are also possible. For example, said other materials may not necessarily need to be heat activated. Another activation means, such as radiation or the introduction of a catalyst or the like may be used to expand the desired material on-demand to form the insulator portions.
d) Furthermore, it will also be appreciated that, in unexpanded form, said foam portions may not strictly be in the form of a foam - i.e. the substance may not necessarily contain trapped bubbles of gas until activated. Nonetheless, such a substance, which has the capability of foaming, or is 'foamable' has been referred to hereinbefore as a 'foam portion'.

## Claims

1. A vehicle sound insulator arranged for installation to a vehicle cavity, the vehicle sound insulator, when installed, comprising a plurality of insulator portions being spaced from one another so as to attenuate a predetermined sound-wave transmitted through the vehicle cavity, the sound-wave having a predetermined frequency range.

2. A vehicle sound insulator according to claim 1, comprising a plurality of heat-activated expandable foam portions that are expandable to form said insulator portions, each expandable foam portion forming a respective insulator portion.

3. A vehicle sound insulator according to claim 2, wherein the expandable foam portions are supported on a common carrier.

4. A vehicle sound insulator according to claim 3, wherein the carrier comprises an adhesive to facilitate fixing of the expandable foam portions to an internal surface of the vehicle cavity.

5. A vehicle sound insulator according to any one of claims 2 to 4, further comprising guide portions arranged to guide the formation of the insulator portions via a controlled expansion of the expandable foam portions.

6. A vehicle sound insulator according to any preceding claim, wherein the spacing of the insulator portions is selected to tune the sound insulator to absorb the frequency range of the predetermined sound-wave.

7. A vehicle sound insulator according to any preceding claim, wherein the spacing between insulator portions is between a quarter and a half of the wavelength of the sound-wave to be attenuated.

8. A vehicle sound insulator according to any preceding claim, comprising at least three insulator portions.

9. A vehicle sound insulator according to any preceding claim, wherein at least one insulating portion extends between internal facing surfaces of the cavity.

10. A vehicle sound insulator according to any preceding claim, wherein at least one insulating portion extends across the cavity and contacts with the cavity along a continuous looping region defined about the internal surface of the cavity, forming a seal against the internal surface of the cavity.

11. A vehicle sound insulator according to any preceding claim, wherein the insulator portions are arranged to compartmentalise the vehicle cavity into a plurality of compartments, said compartments being isolated from one another.

12. A vehicle sound insulator according to any preceding claim, wherein the plurality of insulating portions extend along respective planes, each plane being spaced from another, and each plane extending substantially transverse to a direction that the predetermined sound-wave travels through the vehicle cavity from a sound source on one side of the vehicle cavity, to an sound-insulated position on the other side of the vehicle cavity.

13. A vehicle sound insulator according to any preceding claim, wherein the insulator portions comprise a density and/or porosity that absorbs the frequency range of the predetermined sound-wave.

14. A vehicle sound insulator according to any preceding claim, comprising a plurality of sets of insulator portions, each set being arranged to attenuate a different predetermined sound-wave transmitted through the vehicle cavity.

15. A vehicle comprising a vehicle sound insulator according to any preceding claim.

16. A method of attenuating a predetermined sound-wave transmitted through a vehicle cavity, the method comprising:
determining properties of the predetermined sound-wave to be attenuated;
installing a plurality of insulator portions within the cavity; and
controlling the spacing of the insulator portions to attenuate said predetermined sound-wave.

17. A method according to claim 16, wherein installing a plurality of insulator portions comprises positioning heat-activated expanding foam portions within the cavity, and then expanding the foam portions to form the insulator portions by heating them to a predetermined expansion temperature.

18. A method of manufacturing a vehicle comprising a sound insulator according to any one of claims 1 to 14, wherein the method comprises positioning heat-activated expandable portions within the cavity and then carrying out a heating vehicle manufacturing process, such as a paint bake process, to thereby expand the heat-activated expandable portions to form said insulator portions of the sound insulator.
